# EUROPÄISCHE PATENTSCHRIFT

(11) **EP 2 742 984 B1**
(45) Veröffentlichungstag und Bekanntmachung des Hinweises auf die Patenterteilung: **14.02.2018**
(21) Anmeldenummer: 13196257.3
(22) Anmeldetag: 09.12.2013
(51) Int. Cl.: B01D 27/08

(54) **FILTER MIT ABSORBIERENDEM EXPANSIONSVOLUMEN**
FILTER WITH ABSORBING EXPANSION VOLUME
FILTRE À VOLUME D'EXPANSION ABSORBANT

(30) Priorität: 11.12.2012 US 201261735753 P; 06.12.2013 US 201314099533
(43) Veröffentlichungstag der Anmeldung: 18.06.2014
(73) Patentinhaber: MAHLE International GmbH, 70376 Stuttgart (DE)
(72) Erfinder: XIA, Zhouxuan, Windsor, Ontario N9G 2R5 (CA); MULKERAN, Kevin, Holly, MI Michigan 48442 (US); CHAN, Wing, Novi, MI 48374 (US); DEAN, Mark, Rochester Hills, MI 48307 (US)
(74) Vertreter: BRP Renaud & Partner mbB Rechtsanwälte Patentanwälte Steuerberater

(56) Entgegenhaltungen:
- EP-A1- 1 510 239
- WO-A1-2010/139706
- DE-U1-202009 003 704

## Beschreibung

Die Erfindung betrifft einen Behälter mit einem Filterelement.

### STAND DER TECHNIK

Wasser kann sich auf natürlichem Wege in Kohlenwasserstoffflüssigkeiten, wie zum Beispiel Dieselkraftstoff, Benzin oder Harnstoff, durch eine Reihe von bekannten Mechanismen ansammeln. Zum Beispiel kann Wasserdampf in Kraftstoff kondensieren, der in einem geschlossenen Tank oder Behälter über einen längeren Zeitabschnitt gelagert wird. Wasser kann sich auch in Kohlenwasserstoffflüssigkeiten während des Transports von Raffinerien zu Tankstellen ansammeln. Das Ansammeln von Wasser in einer Kohlenwasserstoffflüssigkeit, wie zum Beispiel Kraftstoff, ist für Verbrennungsmotoren problematisch und insbesondere für Dieselmotoren, da es Korrosion und/oder Wachstum von Mikroorganismen verursachen kann, die Motorenkomponenten beschädigen können. Wasserfilter werden daher oft im Bereich einer Kohlenwasserstoffflüssigkeitszufuhr für einen Motor eingesetzt, um Wasser zu entfernen.

Selektive katalytische Reduktionssysteme sind seit kurzem für Dieselmotoranwendungen verstärkt in Gebrauch. Solche Systeme können im Allgemeinen Harnstoff in einen Abgasstrom injizieren, um zum Beispiel Oxide von Stickstoff zu reduzieren, d.h. NOₓ. Harnstofftanks werden daher häufig in Dieselanwendungen eingesetzt, um eine Hamstoffquelle bereitzustellen, der injiziert werden soll. Harnstoffinjektionssysteme nutzen normalerweise ein Harnstofffilter, um zu verhindern, dass Verunreinigungen zusammen mit dem Harnstoff injiziert werden.

Die Lagerung der oben beispielhaft genannten Flüssigkeiten in einem geschlossenen Behälter, z.B. Tank oder Filter, kann im Allgemeinen problematisch sein, konkret die Ausdehnung der Flüssigkeit beim Gefrieren, z.B. Wasser oder Harnstoff, die in einigen Lösungen auch während besonders kalter Motorbetriebsbedingungen gefrieren kann. Dementsprechend treten bei Wasserfiltern und Harnstofftanks Probleme auf, die aus der erhöhten Gefriertemperatur von Wasser und Harnstoff im Vergleich zu Kohlenwasserstoffkraftstoffen resultieren, besonders wenn ein zugehöriger Motor unterhalb der Gefriertemperatur von Wasser und/oder Harnstoff gelagert oder betrieben werden muss. Deswegen wird ein Filter oder Vorratstank, der eine gefrierende Flüssigkeit enthält, normalerweise gegenüber der Umgebung geschlossen oder abgedichtet. Eine Flüssigkeitsmenge, die Wasser enthält, kann sich ausdehnen, bis sie zu einem Feststoff gefriert, und die Ausdehnung, die aus diesem Gefriervorgang in einem Filter resultiert, kann das Filter oder dessen Komponenten beschädigen. Zum Beispiel kann die Volumenausdehnung von Wasser oder Harnstoff beim Gefrieren dieser Flüssigkeiten zum einem Feststoff auf die Innenfläche(n) des Filters oder Tanks wirken und dadurch das Filter und/oder Komponenten im Filter oder Tank beschädigen.

Einige Ansätze zum Schutz von Filtern oder Vorratstanks vor Schäden auf Grund der Volumenausdehnung konzentrieren sich auf das Aufnehmen von Kräften, die durch den Feststoff verursacht werden, wenn er sich im Filtergehäuse nach ausdehnt. Dieser Ansatz führt jedoch zu Spannungen im Gehäuse, die absorbiert werden müssen. Dementsprechend besteht ein Bedarf an einem verbesserten Lagerungs- oder Filtersystem, das Schäden auf Grund des Gefrierens einer enthaltenen Flüssigkeit verhindert.

Aus der WO 2010/139706 A1 ist es bekannt, bei einem Behälter mit einem Einlass und einem Einlass ein nachgiebiges Element um ein Filterelment der Filtervorritung zu spannen, das zum Absorbieren der Ausdehnung der Flüssigkeit ausgelegt ist.

### KURZBESCHREIBUNG DER ZEICHNUNGEN

FIGUR 1 illustriert eine Teilquerschnittsansicht eines Behälters gemäß einem Beispiel.
FIGUR 2 illustriert eine Querschnittsansicht des Behälters gemäß FIGUR 1.
FIGUR 3A illustriert eine perspektivische Ansicht eines Filters einschließlich eines nachgiebigen Elementes gemäß einem Beispiel.
FIGUR 3B illustriert eine perspektivische Ansicht eines Filters einschließlich eines nachgiebigen Elementes gemäß einem Beispiel.
FIGUR 3C illustriert eine perspektivische Querschnittsansicht eines Behälters einschließlich eines nachgiebigen Elementes gemäß einem anderen Beispiel.
FIGUR 4A ist eine perspektivische Vorderansicht eines Behälters einschließlich einer Menge an Flüssigkeit während eines Gefriervorgangs.
FIGUR 4B ist eine Querschnittsvorderansicht eines Behälters gemäß FIGUR 4A einschließlich eines nachgiebigen Elementes darin.

### AUSFÜHRLICHE BESCHREIBUNG

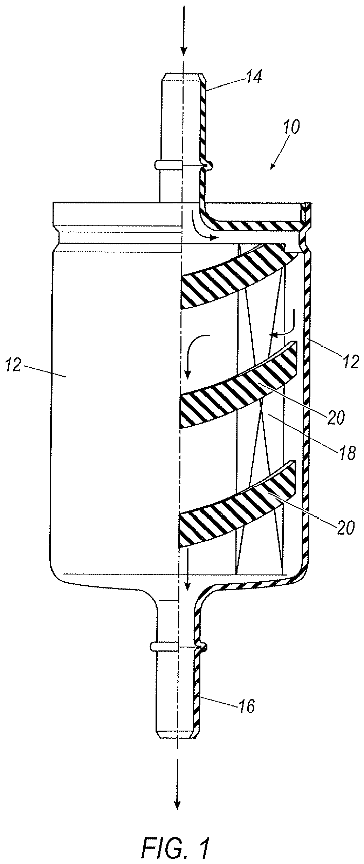

Verschiedene beispielhafte Illustrationen eines Behälters mit einem nachgiebigen Element, das die Ausdehnung einer Flüssigkeit in einem Behältergehäuse aufnimmt, z.B. Wasser oder Harnstoff, werden hierin bereitgestellt. Mit Verweis auf Figur 1 kann ein beispielhafter Behälter 10 ein Gehäuse 12 umfassen, das z.B. ein Volumen im Behälter 10 definiert, durch welches ein flüssiges Medium oder Fluid zum Filtern und/oder Lagern des Mediums geschickt werden kann. Das Gehäuse 12 kann einen axialen Einlass 14 und Auslass 16 umfassen, die zentral angeordnet oder zum Rand hin versetzt sein können. Der Behälter 10 kann in einigen beispielhaften Ansätzen ferner ein Filterelement 18 umfassen, das vom Gehäuse 12 aufgenommen wird. Das Filterelement 18 kann eine feste Oberseite oder Abdeckung über der oberen Endfläche umfassen, um die Flüssigkeit zu den äußeren Bereichen des Gehäuses 12 zu lenken. Die Flüssigkeit kann axial durch den Einlass 14 eingeleitet werden und radial zum äußeren Teil des Gehäuses 12 strömen. Zum Beispiel kann die Flüssigkeit, die gefiltert werden soll, radial durch das Filtermaterial von außen nach innen strömen. Das Filterelement 18 kann sich bis zum Boden des Gehäuses 12 erstrecken, um sicherzustellen, dass die Flüssigkeit durch das Filterelement 18 fließt, bevor es durch den Auslass 16 ausströmt. Daher kann das Filterelement 18 so konfiguriert werden, dass es Verunreinigungen aus einer Flüssigkeit herausfiltert, z.B. Wasser oder andere Verunreinigungen, oder Verunreinigungen von Harnstoff, nur als Beispiel, wenn die Flüssigkeit durch den Behälter 10 fließt. Nach dem radialen Fluss durch das Filterelement 18 kann die gefilterte Flüssigkeit durch den Auslass 16 abgelassen werden.

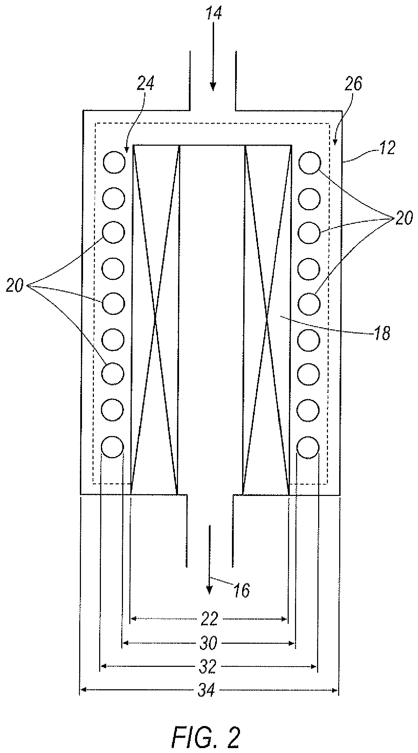

Mit Verweis auf die Figuren 1 und 2 kann der Behälter 10 ein nachgiebiges Element 20 umfassen, zum Beispiel einen nachgiebigen Schlauch oder Schaum. Ein beispielhaftes nachgiebiges Element 20 kann im Allgemeinen einen Umfang des Filterelementes 18 im Gehäuse 12 umschließen. Zum Beispiel kann das nachgiebige Element 20 so angeordnet sein, dass es einen Umfang oder Außendurchmesser 22 des Filterelementes 18 umgibt (z.B. axial benachbart zum Außendurchmesser 22 des Filterelementes 18). Das nachgiebige Element 20 kann im Allgemeinen eine Änderung im Volumen einer Flüssigkeitsmenge im Gehäuse 12 aufnehmen, wenn sie zu einem Feststoff gefriert, besonders wenn Wasser eine Komponente ist. Zum Beispiel kann ein beispielhaftes nachgiebiges Element 20 im Allgemeinen in einem äußeren Teil eines Volumens angeordnet sein, das durch das Gehäuse 12 definiert wird. Das nachgiebige Element 20 kann eine Anfangsgröße oder -volumen haben und kann zu einer geringeren Größe oder Volumen komprimiert werden, wenn die Flüssigkeit gefriert, wodurch sie sich innerhalb des Gehäuses 12 ausdehnt. Dementsprechend kann das nachgiebige Element 20 eine elastische und/oder elastisch verformbare Konstruktion haben, die dem nachgiebigen Element 20 ermöglicht, sich zu verformen/komprimieren, wenn die Spannung oder der Druck im Gehäuse 12 - ansteigt (z.B. im Fall des Gefrierens von Flüssigkeit zu einem Feststoff). Analog ermöglicht die Elastizität dem nachgiebigen Element 20, sich zurück zu seiner Anfangsgröße oder -volumen auszudehnen.

Das nachgiebige Element 20 kann gegenüber dem Gehäuse 12 "nachgiebig" sein. Zum Beispiel kann die Nachgiebigkeit des nachgiebigen Schlauchs oder Schaumelementes 20 hinreichend größer sein zumindest als das Material des Gehäuses 12, so dass eine Verbiegung des nachgiebigen Elementes 20 im nachgiebigen Element 20 zugunsten der Verbiegung (und möglicherweise Beschädigung) des Gehäuses 12 auftritt. Der nachgiebige Schlauch oder das Schaumelement 20 kann sich dadurch im Allgemeinen in Größe oder Volumen reduzieren, z.B. im Ergebnis der Kompression durch die gefrierende Flüssigkeit, um die Ausdehnung eines gefilterten Materials aufzunehmen, z.B. Wasser oder Harnstoff, um den Schaden an Filterkomponenten zu verringern, wie zum Beispiel dme Gehäuse 12 und/oder dem Filterelement 18, wie weiter unten beschrieben wird.

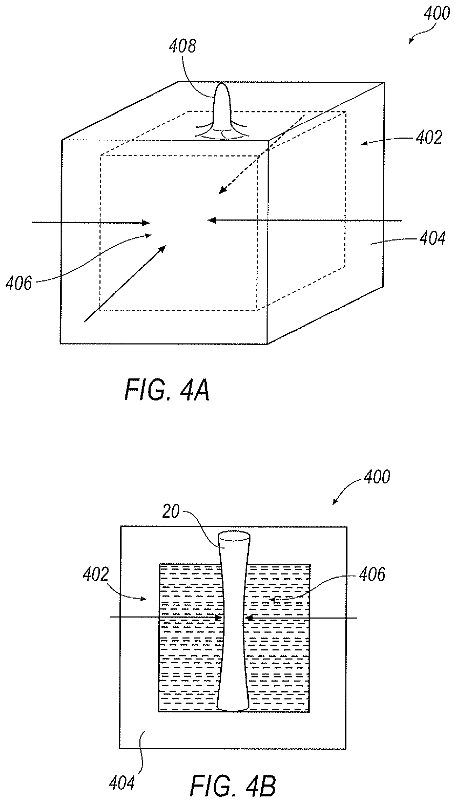

Mit Verweis auf Figur 4A und 4B kann die Flüssigkeit während des Gefriervorgangs einer Flüssigkeitsmenge in einem gefrorenen Zellkubus 400 (z.B. Figur 4A) anfangs in einem äußeren Bereich 402 innerhalb des gefrorenen Zellkubus 400 gefrieren, wobei ein Festkörper oder eine "Eisschale" 404 um eine restliche Menge von ungefrorener Flüssigkeit 406 gebildet wird. Die Eisschale 404 bildet im Allgemeinen ein geschlossenes Volumen, das eine Menge von ungefrorener Flüssigkeit 406 im Innern einschließt und sie in der Eisschale 404 einschließt (z.B. wie in Figur 4A und 4B gezeigt). Wenn die anfänglich ungefrorene Flüssigkeitsmenge 406 im mittleren oder inneren Teil anschließend gefriert (z.B. schreitet die Eisschale 404 nach innen fort, wie durch die Pfeile in Figur 4A angezeigt), wird die Eisschale 404 durch die restliche Flüssigkeit 406 innerhalb der Schale nach außengedrängt, wenn sie zu einem Festkörper gefriert und dadurch an Volumen zunimmt. Zum Beispiel können einige Harnstofflösungen bei 11 °C gefrieren und sich im Volumen um 7-12 Prozent vergrößern. Wenn also die Eisschale 404 nach innen fortschreitet, gefriert die ungefrorene Flüssigkeit 406, was einen Innendruck erzeugt, der nach außen drückt, wodurch die Eisschale 404 gezwungen wird, sich im Volumen zu vergrößern. Der Druck kann ferner die ungefrorene Flüssigkeit veranlassen, nach oben gegen die Oberseite der Eisschale 404 zu drücken, was anschließend bewirkt, dass das Eis nach oben schießt oder eine Krone 408 bildet. In Bezug auf einen Behälter 10, der ein Volumen definiert, kann diese Ausdehnung die Außenwände beschädigen, in einigen Fällen in irreparabler Weise.

Keine Vorrichtung an der Oberfläche oder außerhalb der ungefrorenen Flüssigkeit 406 hilft bei der Reduzierung der vorgenannten Ausdehnung, wenn die Flüssigkeit zu einem Feststoff gefriert. Dementsprechend kann mit Verweis auf Figur 4B ein nachgiebiges Element 20 (z.B. ein nachgiebiger Schlauch oder Schaum) zur Aufnahme der Ausdehnung der anfangs ungefrorenen Flüssigkeit 406 in der Eisschale 404 im Bereich in der Eisschale 404 gehalten werden. Folglich erzeugt die Flüssigkeit, die noch in der Eisschale 404 enthalten ist, Druck in der Eisschale 404, der das nachgiebige Element 20 komprimiert, wodurch das Gesamtvolumen des nachgiebigen Elementes 20 in der Eisschale 404 reduziert wird. Die Kompression des nachgiebigen Elementes 20 kann proportional die Ausdehnung der anfangs ungefrorenen Flüssigkeit 404 aufnehmen, wenn sie zu einem Feststoff gefriert.

Mit Verweis nun auf Figur 2 kann das nachgiebige Element 20 eine Volumenausdehnung von Flüssigkeit aufnehmen, die die Neigung zum Ansammeln innerhalb der "Eisschale" aufweist, wenn sie sich in einen Feststoff verwandelt. Zum Beispiel kann der nachgiebige Schlauch oder Schaumelement 20 anfangs an einem Umfang des Filterelementes 18 angeordnet werden, in einem äußeren ringförmigen Bereich des Gehäuseinneren. Der Umfangs- oder äußere ringförmige Bereich kann in einer sekundären Gefrierzone 24 enthalten sein, die selbst innerhalb einer primären Gefrierzone 26 enthalten sein kann, welche mit der Bildung der Eisschale verbunden ist, so dass sich die Eisschale mit dem nachgiebigen Element 20 bildet, das zumindest teilweise eingeschlossen ist. In einem Beispiel ist das nachgiebige Element 20 vollständig in der Eisschale eingeschlossen, so dass es von der sich ausdehnenden Flüssigkeit/Festkörper komprimiert wird, wodurch das Gesamtvolumen des nachgiebigen Elementes 20 verringert wird (z.B. ist das nachgiebige Element 20 im Wesentlichen in der sekundären Gefrierzone 24 enthalten). Das heißt, in einigen Fällen wird das ganze Filterelement 18 von einer Eisschale umgeben, selbst der obere Bereich der sekundären und primären Gefrierzone 24, 26 in Bezug auf den Einlass 14. Der nachgiebige Schlauch oder das Schaumelement 20 kann komprimiert werden, wenn der Druck, der aus der sich ausdehnenden Flüssigkeit/Festkörper innerhalb der Eisschale ausgeübt wird, ansteigt, wodurch sich das Gesamtvolumen des nachgiebigen Schlauchs oder des Schaumelementes 20 verringert. Außerdem kann auch eine Fluidverbindung zwischen einem nachgiebigen Element 20 und der Umgebungsluft zulässig sein. Spezieller gesagt, kann ein Rohr (das als nachgiebiger Schlauch oder Schaumelement 20 fungiert) innerhalb des Gehäuses 12 positioniert werden, wobei jedes Ende außerhalb des Behälters 10 und/oder des Gehäuses 12 angeordnet ist, so dass durch Eis, das sich im Gehäuse 12 bildet, Luft aus dem Rohr gedrückt wird oder das Rohr anderenfalls komprimiert wird. Das Komprimieren des nachgiebigen Elementes 20 kann daher eine proportionale Ausdehnung von Eis oder Festkörper innerhalb des Volumens des Gehäuses 12 ermöglichen.

Wie in FIGUR 2 illustriert, kann die Bildung der Eisschale außerhalb der gestrichelten Grenze, die die primäre Gefrierzone 26 anzeigt, innerhalb des Gehäuses 12 auftreten. Die sekundäre Gefrierzone 24 des Gehäuses 12 kann allgemein zum Ansammeln von Flüssigkeit, z.B. Wasser oder Harnstoff, innerhalb einer Eisschale liegen, die sich in der primären Gefrierzone 26 des Gehäuses 12 bildet. Das nachgiebige Element 20 kann im Allgemeinen innerhalb der primären Gefrierzone 26 enthalten sein (z.B. zumindest teilweise innerhalb der primären Gefrierzone 26 und innerhalb der sekundären Gefrierzone 24). Dementsprechend kann sich die Eisschale außerhalb des nachgiebigen Elementes 20 bilden. Da die Flüssigkeit innerhalb der Eisschale (z.B. innerhalb der sekundären Gefrierzone 24) anschließend zu einem Feststoff gefriert, kann das nachgiebige Element 20 eine Ausdehnung der Flüssigkeit, die sich in einen Feststoff verwandelt, durch Komprimieren ermöglichen. Erklärungshalber können die sekundären und primären Gefrierzonen 24, 26 so positioniert sein, dass eine Flüssigkeitsmenge, die sich im Gehäuse 12 befindet, in einem ersten Stadium gefriert, wobei eine erste Menge der Flüssigkeit, die in der primären Gefrierzone 26 des Behälters 10 enthalten ist, gefriert und in einem sekundären Stadium, wobei eine zweite Flüssigkeitsmenge innerhalb der sekundären Gefrierzone 24 gefriert, wobei das erste Stadium dem zweiten Stadium vorangeht.

Das nachgiebige Element 20 kann daher im Allgemeinen eine Menge von Flüssigkeit begrenzen, die zu einer gegebenen Zeit innerhalb des Gehäuses 12 vorhanden ist, und insbesondere innerhalb der sekundären Gefrierzone 24, und so die Ausdehnung der Flüssigkeit ermöglichen, wenn sie sich in einen Feststoff verwandelt. Durch Begrenzen einer Menge oder eines Volumens der Flüssigkeit, die in der Eisschale enthalten ist, wird die äußere Ausdehnung der Eisschale (und die daraus resultierende Kraft, die auf das Gehäuse 12 durch eine solche Ausdehnung ausgeübt wird) begrenzt oder vollkommen beseitigt. Wichtig ist, dass im Gegensatz zu vorherigen Ansätzen die beispielhaften Illustrationen auf Grund der Bildung des Feststoffs im Ergebnis des Gefrierens sich keine zusätzliche Spannung für das Gehäuse 12 ergeben kann, da die Mengen an Flüssigkeit und Eis auf eine Menge begrenzt ist, bei der eine interne Volumenkapazität des Gehäuses 12 durch den sich ausdehnenden Feststoff, z.B. gefrorenen Harnstoff oder Wasser, nicht überstiegen wird. Wenn dementsprechend die Temperatur auf den Gefrierpunkt einer gegebenen Flüssigkeit fällt, wird der Behälter nicht durch die entstehende Ausdehnung von Flüssigkeit beschädigt, wenn sie in einen Feststoff übergeht.

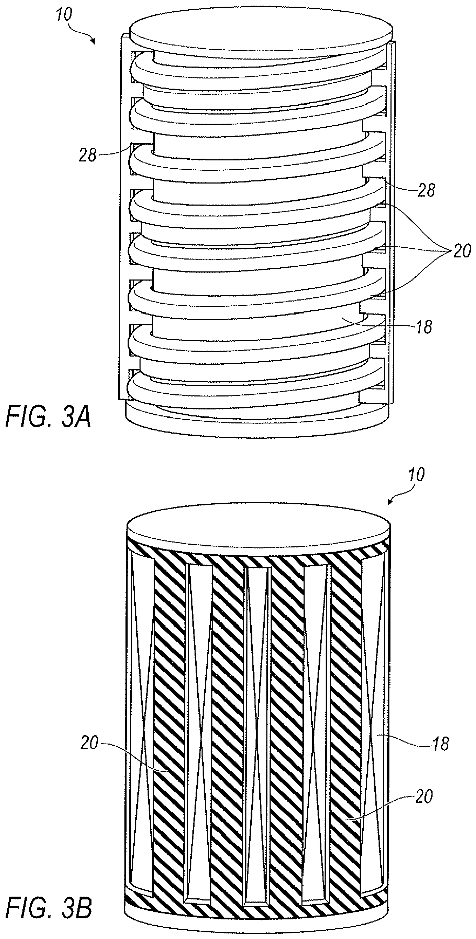

Mit Bezug nun auf die Figuren 3A - 3C kann jede Art von nachgiebigen Elementen 20 eingesetzt werden, einschließlich eines nachgiebigen Schlauchs oder Schaums, ohne darauf beschränkt zu sein. In einer beispielhaften Illustration kann ein nachgiebiges Element 20 ein kompressibles, geschlossenzelliges Schaummaterial umfassen, das im Allgemeinen um ein Filterelement 18 innerhalb eines Gehäuses 12 angeordnet ist. Beispielhafte geschlossenzellige Schaummaterialien können in einem Stanz- oder Beschneidprozess geformt werden. Das Schaummaterial kann dann komprimiert werden, wenn sich innerhalb des Gehäuses 12 eine feste Schale bildet und die restliche Flüssigkeit, die in der Schale enthalten ist, zu einem Feststoff gefriert, wodurch die äußere Ausdehnung durch die Schale verhindert oder zumindest reduziert wird. Der kompressible Schaum kann daher eine Anfangsdicke oder -volumen innerhalb des Gehäuses 12 und der primären Gefrierzone 26 definieren, und dieses Anfangsvolumen kann komprimiert oder reduziert werden, wenn sich die Flüssigkeit zu einem Feststoff innerhalb der Schale ausdehnt. Ein nachgiebiges geschlossenzelliges Schaumelement 20, das keine Flüssigkeiten absorbiert, wie zum Beispiel Wasser, kann Flüssigkeit, die in der sekundären Gefrierzone 24 angeordnet ist, verdrängen, wobei es die Flüssigkeitsmenge begrenzt, die innerhalb der Eisschale eingeschlossen werden kann. Das nachgiebige Element 20 kann einen Anstieg des Volumens der Flüssigkeit innerhalb der Eisschale "absorbieren", wenn sie zu einem Feststoff gefriert, indem es als Reaktion auf das Gefrieren und Ausdehnen der Flüssigkeit zu einem Feststoff innerhalb der anfangs gebildeten Eisschale komprimiert wird.

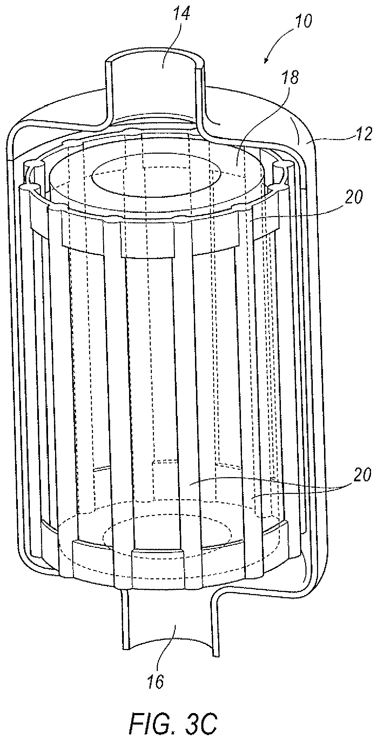

In einem anderen Beispiel kann das absorbierende oder nachgiebige Element 20 einen (im Vergleich zu Eis und/oder dem Gehäuse 12) relativ flexiblen Schlauch umfassen, z.B. wie in Figur 3A und 3C illustriert. Das nachgiebige Schlauchelement 20 kann ein Anfangsvolumen innerhalb des Gehäuses 12 definieren, das eine Flüssigkeitsmenge, die in der Eisschale enthalten ist, begrenzt. Das nachgiebige Schlauchelement 20 kann zu einem kleineren Volumen innerhalb des Gehäuses 12 komprimiert werden (z.B. ein komprimiertes Volumen), wenn sich die Eisschale bildet und die Flüssigkeit, die in der Schale enthalten ist, weiter gefriert und sich zu einem Feststoff ausdehnt. Das nachgiebige Schlauchelement 20 kann so der Beschädigung des Gehäuses 12 widerstehen, indem es eine Flüssigkeitsmenge innerhalb des Gehäuses 12 und, wichtig, innerhalb der primären Gefrierzone 26 begrenzt, wo die Flüssigkeit, die im Gehäuse 12 vorhanden ist, wahrscheinlich eine Schale bildet. Dementsprechend kann das nachgiebige Schlauchelement 20 Spannungen auf dem Gehäuse 12 reduzieren oder vollständig beseitigen, die sich anderenfalls aus der Ausdehnung der Flüssigkeit zu einem Feststoff ergeben könnten.

Ein nachgiebiges Schlauchelement 20 kann aus einem Kunststoff-, Gummi- oder anderen wasserbeständigen oder chemikalienbeständigen Material gebildet werden, dies nur als Beispiel. Ein beispielhafter Schlauch kann jede beliebige Konfiguration haben, die geeignet ist, wie zum Beispiel ein einzelner Streifen, der sich entlang einer Außenseite des Filterelementes 18 erstreckt, oder der Schlauch kann an einem Umfang oder Außendurchmesser 22 des Filterelementes 18 positioniert werden, dies nur als Beispiel.

Das nachgiebige Element 20 kann das Filterelement 18 schraubenförmig oder wie eine Spule umgeben (wie z.B. in Figur 3A illustriert), kann z.B. den Umfang des Filterelementes 18 vertikal umschließen (wie z.B. in Figur 3B und 3C illustriert). Das nachgiebige Element 20 kann eine ringförmige Konfiguration umfassen, wobei es in eine Ringform zur Installation im Filterraum zwischen dem Gehäuse 12 und dem Außendurchmesser 22 des Filterelementes 18 gerollt werden kann. Wie in Figur 3C illustriert, kann das nachgiebige Element im Allgemeinen einen Abstand vom Filterelement 18 definieren, um nicht den Flüssigkeitsstrom durch das Filterelement 18 zu unterbrechen, und ausreichend Pufferraum ermöglichen, um die Ausdehnung von Flüssigkeit aufzunehmen, wenn sie gefriert.

Mit Verweis auf Figur 3A kann der Behälter 10 ein Stützglied 28 umfassen, wie zum Beispiel eine Führung, ein Ablagegestell, Rahmen oder Clip(s) umfassen, kann zum Stützen eines nachgiebigen Elementes 20 eingesetzt werden, um sicherzustellen, dass das nachgiebige Element 20 innerhalb des Gehäuses 12 so positioniert bleibt, wie gewünscht. Zum Beispiel kann ein "Kunststoffablagegestell" 28 (z.B. wie in Figur 3A gezeigt) im Allgemeinen einen gewünschten Abstand des nachgiebigen Elementes 20 aufrechterhalten, wenn es das Filterelement 18 umschließt. Außerdem kann das Kunststoffablagegestell 28 das nachgiebige Element 20 im gewünschten Abstand oder Position innerhalb des Behälters 10 halten. Zum Beispiel kann mit Verweis auf Figur 2 der nachgiebige Schlauch oder Schaumelement 20 in einer geeigneten Position zwischen einem Innendurchmesser 30 des nachgiebigen Elementes 20 und dem Filterelement 18 gehalten werden, wodurch sichergestellt wird, dass das nachgiebige Element 20 nicht den Durchfluss der Flüssigkeit durch das Filterelement 18 blockiert und eine konsistente Filtrationsfläche entlang einer Länge des Filterelementes 18 behält, wie weiter unten beschrieben wird. Außerdem wird das nachgiebige Element 20 erfindungsgemäß bei einem gewünschten Abstand oder Spalt zwischen einem Außendurchmesser 32 des nachgiebigen Elementes 20 und einer Innenfläche 34 des Gehäuses 12 gehalten, um sicherzustellen, dass zumindest ein Teil und in einigen Fällen ein ganzes nachgiebiges Element 20 innerhalb einer primären Gefrierzone 26 des Gehäuses 12 positioniert ist. Die primäre Gefrierzone 26 kann mindestens teilweise den Raum zwischen der Innenfläche 34 des Gehäuses 12 und dem Außendurchmesser 32 des nachgiebigen Elementes 20 umfassen. Die sekundäre Gefrierzone 24 kann mindestens teilweise den Raum zwischen dem Außendurchmesser 32 des nachgiebigen Elementes 20 und dem Außendurchmesser 22 des Filterelementes umfassen.

Mit Verweis wieder auf Figur 3A kann das Stützglied 28, wie zum Beispiel eine Klammer, Führung oder Befestigungselement, zum Positionieren des nachgiebigen Elementes 20 um einen Umfang des Filterelementes 18 eingesetzt werden. Zum Beispiel kann eine Klammer im Allgemeinen einen Teil des flexiblen Schlauchs, z.B. eine Schlauchschelle, um einen äußeren Umfang halten, so dass der Schlauch ordnungsgemäß positioniert ist, um die Flüssigkeitsansammlung innerhalb der Eisschale zu begrenzen, wodurch eine Menge an Eis reduziert wird, das sich innerhalb der Eisschale bilden kann, und potenzielle Schäden an Gehäuse 12 und/oder Filterelement 18 zu reduzieren. Das nachgiebige Element 20 kann gleichermaßen um das Filterelement 18 über ein Filteroberteil oder eine Bodenplatte befestigt werden, wie im Fall eines vertikal konfigurierten nachgiebigen Elementes 20, um einen ordnungsgemäßen Abstand und/oder Positionierung des nachgiebigen Elementes 20 innerhalb des Gehäuses 12 sicherzustellen. Das nachgiebige Element 20 kann am Oberteil und/oder der Bodenplatte gehalten oder festgeschweißt werden, so dass das nachgiebige Element 20 seinen ordnungsgemäßen Abstand und Position behält.

Alternativ oder zusätzlich zur Sicherung des nachgiebigen Elementes 20 durch mechanische Befestigung kann das nachgiebige Element 20 so gebildet sein, dass es um ein Filterelement 18 mit einem gewünschten Abstand passt. Zum Beispiel kann ein Teil des Schlauchs für ein gegebenes Filterelement 18 dimensioniert sein, so dass, wenn zwei Enden des Schlauchs aneinander gehalten oder geschweißt sind, ein Rohr oder nachgiebiger Ring gebildet wird, der um den äußeren Umfang 22 des Filterelementes 18 passt. Des Weiteren kann in solchen Beispielen Gas (z.B. Luft) innerhalb des Schlauchs abgedichtet werden, wodurch die Nachgiebigkeit des Schlauchs verringert wird, z.B. um die Gesamtkapazität für Aufnahme einer Volumenausdehnung zu erhöhen. Mit Verweis auf Figur 3B kann ein nachgiebiges Schaumelement 20 formschlüssig um ein Filterelement 18 mit gewünschtem Abstand / Positionierung innerhalb des Behälters 10 dimensioniert werden, wie vorher erwähnt. Die beiden Enden des nachgiebigen Schaumelementes 20 können aneinander befestigt / gehalten werden, was ermöglicht, dass das nachgiebige Element 20 um das Filterelement 18 angeordnet wird. Außerdem kann mit Verweis auf Figur 3C ein nachgiebiges Schlauchelement 20 als Käfig konfiguriert und so dimensioniert werden, dass es um das Filterelement 18 mit einem gewünschten Abstand passt. Zum Beispiel kann der Schlauch vertikal ausgerichtet und über einen ringförmigen Verbinder verbunden werden. Luft kann in den Schläuchen gefangen oder abgedichtet werden, wodurch die Gesamtkapazität für Absorption des nachgiebigen Schlauchelementes 20 erhöht wird. Der Durchmesser des nachgiebigen Elementes 20 kann größer als der Durchmesser des Filterelementes 18 derart sein, dass ein Abstand oder eine Lücke zwischen dem Filterelement 18 und dem nachgiebigen Element 20 besteht. Dementsprechend kann das nachgiebige Element 20 leicht zum Auswechseln und/oder Reinigen des Filterelementes 18 entfernt werden.

Mit Verweis nun auf Figur 2 kann das nachgiebige Element 20 so dimensioniert werden, dass es einen Spalt oder Abstand zwischen einem Innendurchmesser 30 des nachgiebigen Elementes 20 und einem Filterelement 18 definiert. Zum Beispiel kann ein Innendurchmesser 30 eines nachgiebigen Elementes 20 im Allgemeinen größer als ein Außendurchmesser 22 des Filterelementes 18 sein. Zum Beispiel kann ein geschlossenzelliges nachgiebiges Schaumelement 20 größer als der Außendurchmesser 22 des Filterelementes 18 sein. Dementsprechend verhindert oder behindert das nachgiebige Element 20 nicht den Strom von Flüssigkeit, der durch das Filterelement 18 führt, z.B. ein Flüssigkeitsstrom, der vom Filterelement 18 gefiltert wird. Außerdem sorgt der Abstand für einen Pufferbereich, um die Eis-/Feststoffausdehnung aufzunehmen, wenn Flüssigkeit gefriert, um so das Filterelement 18 nicht zu beschädigen.

Wie oben allgemein beschrieben wird, kann das nachgiebige Element 20 auch kleiner als eine Innenfläche 34 des Filtergehäuses 12 sein. Zum Beispiel kann ein Außendurchmesser 32 des nachgiebigen Schlauchs oder Schaumelementes 20 kleiner als ein Innendurchmesser 34 eines Filtergehäuses 12 sein, in welchem das Filterelement 18 und das nachgiebige Element 20 montiert werden. Ein Spalt oder Abstand zwischen dem nachgiebigen Element 20 und einer Innenfläche 34 des Filtergehäuses 12 kann im Allgemeinen ermöglichen, dass sich eine Eisschale anfänglich außerhalb des nachgiebigen Elementes 20 bildet (z.B. Eisbildung in der primären Gefrierzone 26). Wenn dementsprechend die Eisschale sich außerhalb des nachgiebigen Elementes 20 bildet, erzeugt die Flüssigkeit, die weiterhin in der Eisschale enthalten ist, Druck innerhalb der Eisschale, der das nachgiebige Element 20 - z.B. ein Schlauch oder Schaum - zusammendrückt, wodurch das Gesamtvolumen des nachgiebigen Elementes 20 innerhalb der Eisschale reduziert wird. Das nachgiebige Element 20 kann ein Anfangsvolumen innerhalb des Gehäuses 12 und ein komprimiertes Volumen, das kleiner als das Anfangsvolumen ist, bei Bildung der Eisschale definieren. In einigen beispielhaften Ansätzen kann eine Änderung des Gesamtvolumens einer Flüssigkeit, die im Behälter 10 enthalten ist, etwa 7-15 Prozent betragen, diese kann durch das nachgiebige Element 20 im Behälter 10 vollständig aufgenommen werden. Ein Unterschied zwischen dem Anfangs- und dem komprimierten Volumen des nachgiebigen Elementes 20 kann einem Volumenunterschied zwischen einem Volumen, das anfangs innerhalb einer Eisschale gebildet wird, und einem Volumen von Eis entsprechen, das durch Flüssigkeit gebildet wird, die anfangs innerhalb der Eisschale bleibt.

Wie oben bemerkt, kann das nachgiebige Element 20 so konfiguriert werden, dass es eine Änderung im Volumen aufnimmt, das mit einer Flüssigkeit verbunden ist, z.B. Harnstoff oder Wasser, welche sich innerhalb eines Filtergehäuses 12 bildet und die sich anschließend ausdehnt, während sie zu einem Feststoff gefriert, wie zum Beispiel Eis. Um Schäden an einem Gehäuse 12 zu verhindern, kann das nachgiebige Element 20 eine Nachgiebigkeit und ein Anfangsvolumen haben, die ausreichen, um die Ausdehnung der Flüssigkeit aufzunehmen, die zu einem Feststoff gefriert. Gemäß einem Beispiel kann das Volumen des nachgiebigen Elementes 20 größer als 15 Prozent des Volumens des Filtergehäuses 12 sein, um die Gesamtaufnahme zu ermöglichen, wenn sich die Flüssigkeit während des Gefrierprozesses ausdehnt. Faktoren, die bei der Konstruktion eines nachgiebigen Elementes 20 zu berücksichtigen sind, die ausreicht, Schäden an einem Gehäuse 12 zu verhindern, umfassen die Anfangsgröße einer Eisschale innerhalb eines gegebenen Gehäuses 12, ein Volumen, das in der Eisschale enthalten ist, in dem sich eine Flüssigkeit ansammeln kann, und der Volumenausdehnungskoeffizient einer Flüssigkeit, die im Behälter 10 vorhanden ist.

Die beispielhaften Illustrationen sind nicht auf die vorher beschriebenen Beispiele begrenzt. Es versteht sich, dass die obige Beschreibung nur erläuternden Charakter haben und keine Einschränkung darstellen soll. Viele Ausführungsformen und Anwendungen außer den Beispielen, die hier bereitgestellt werden, sind beim Lesen der obigen Beschreibung möglich. Der Geltungsbereich der vorliegenden Erfindung darf nicht mit Verweis auf die obige Beschreibung bestimmt werden, sondern muss stattdessen mit Verweis auf die angehängten Ansprüche, zusammen mit dem vollen Geltungsbereich von Äquivalenten, bestimmt werden, zu welchen solche Ansprüche berechtigen. Es wird erwartet und beabsichtigt, dass zukünftige Entwicklungen in dem hierin diskutierten Fachgebiet auftreten werden und dass die offenbarten Systeme und Verfahren in solche zukünftigen Ausführungsformen aufgenommen werden. Zusammengefasst gesagt, versteht es sich, dass die Erfindung modifiziert und variiert werden kann und nur durch die folgenden Ansprüche begrenzt wird.

## Patentansprüche

1. Behälter (10), umfassend:
ein Gehäuse (12), das einen Einlass (14) und einen Auslass (16) hat, wobei das Gehäuse (12) ein Volumen definiert;
ein Filterelement (18), das im Gehäuse (12) angeordnet und das zum Abtrennen einer Verunreinigung aus einer Flüssigkeit konfiguriert ist; und
ein nachgiebiges Element (20), das einen Umfang des Filterelementes (18) innerhalb des Gehäuses (12) umschließt, wobei das nachgiebige Element (20) im Verhältnis zur Ausdehnung der Flüssigkeit komprimierbar ist, wenn sie in einen Feststoff übergeht,
**dadurch gekennzeichnet,**
**dass** das nachgiebige Element (20) einen Spalt zwischen einer Außenfläche des nachgiebigen Elementes (20) und einer Innenfläche des Gehäuses (12) definiert.

2. Behälter nach Anspruch 1,
**dadurch gekennzeichnet,**
**dass** das nachgiebige Element (20) einen Spalt zwischen einer Innenfläche des nachgiebigen Elementes (20) und einer Außenfläche des Filterelements (18) definiert.

3. Behälter nach Anspruch 1,
**dadurch gekennzeichnet,**
**dass** das nachgiebige Element (20) ein flüssigkeitsbeständiges Material ist.

4. Behälter nach Anspruch 3,
**dadurch gekennzeichnet,**
**dass** das flüssigkeitsbeständige Material ein geschlossenzelliges Schaummaterial ist.

5. Behälter nach Anspruch 1,
**dadurch gekennzeichnet,**
**dass** das nachgiebige Element (20) ein Rohr ist, das sich um den Umfang des Filterelements (18) erstreckt.

6. Behälter nach Anspruch 1,
**dadurch gekennzeichnet,**
**dass** dieser ferner eine Führung umfasst, die zumindest entlang einer Seite des Filterelementes (18) angeordnet ist, wobei die Führung das nachgiebige Element (20) etwa am Umfang des Filterelementes (18) positioniert.

7. Behählter nach Anspruch 1,
**dadurch gekennzeichnet,**
**dass** das nachgiebige Element (20) axial um einen äußeren Umfang des Filterelementes (18) angeordnet ist.

8. Behälter nach Anspruch 7,
**dadurch gekennzeichnet,**
**dass** das nachgiebige Element (20) einen Spalt zwischen einer Innenfläche des nachgiebigen Elementes (20) und dem äußeren Umfang des Filterelementes (18) definiert.

9. Behälter nach Anspruch 7,
**dadurch gekennzeichnet,**
**dass** das nachgiebige Element (20) den Umfang des Filterelementes (18) in einer Spirale und vertikalen Anordnung umschließt.

## Claims

1. Container (10), comprising:
a housing (12) which has an inlet (14) and an outlet (16), wherein the housing (12) defines a volume;
a filter element (18) which is arranged in the housing (12) and which is configured to separate an impurity from a liquid; and
a flexible element (20) which encloses a circumference of the filter element (18) inside the housing (12), wherein the flexible element (20) is compressible in relation to the expansion of the liquid when it changes into a solid,
**characterised in that**
the flexible element (20) defines a gap between an outer surface of the flexible element (20) and an inner surface of the housing (12).

2. Container according to claim 1,
**characterised in that**
the flexible element (20) defines a gap between an inner surface of the flexible element (20) and an outer surface of the filter element (18).

3. Container according to claim 1,
**characterised in that**
the flexible element (20) is a liquid-resistant material.

4. Container according to claim 3,
**characterised in that**
the liquid-resistant material is a closed-cell foam material.

5. Container according to claim 1,
**characterised in that**
the flexible element (20) is a pipe which extends around the circumference of the filter element (18).

6. Container according to claim 1,
**characterised in that**
it also has a guide which is arranged at least along one side of the filter element (18), wherein the guide positions the flexible element (20) roughly on the circumference of the filter element (18).

7. Container according to claim 1,
**characterised in that**
the flexible element (20) is arranged axially around an outer circumference of the filter element (18).

8. Container according to claim 7,
**characterised in that**
the flexible element (20) defines a gap between an inner surface of the flexible element (20) and the outer circumference of the filter element (18).

9. Container according to claim 7,
**characterised in that**
the flexible element (20) encloses the circumference of the filter element (18) in a spiral and vertical arrangement.

## Revendications

1. Récipient (10), comprenant :
un boîtier (12) qui possède une entrée (14) et une sortie (16), dans lequel le boîtier définit un volume (12) ;
un élément de filtre (18) qui est disposé dans le boîtier (12) et est configuré pour séparer une impureté hors d'un liquide ; et
un élément souple (20) qui entoure un pourtour de l'élément de filtre (18) à l'intérieur du boîtier (12), dans lequel l'élément souple (20) peut être comprimé par rapport à l'expansion du liquide, quand il passe à l'état solide,
**caractérisé en ce**
**que** l'élément souple (20) définit une fente entre une surface extérieure de l'élément souple (20) et une surface intérieure du boîtier (12).

2. Récipient selon la revendication 1,
**caractérisé en ce**
**que** l'élément souple (20) définit une fente entre une surface intérieure de l'élément souple (20) et une surface extérieure de l'élément de filtre (18).

3. Récipient selon la revendication 1,
**caractérisé en ce**
**que** l'élément souple (20) est un matériau résistant aux liquides.

4. Récipient selon la revendication 3,
**caractérisé en ce**
**que** le matériau résistant aux liquides est un matériau en mousse à pores fermés.

5. Récipient selon la revendication 1,
**caractérisé en ce**
**que** l'élément souple (20) est un tube qui s'étend autour du pourtour de l'élément de filtre (18).

6. Récipient selon la revendication 1,
**caractérisé en ce**
**que** celui-ci comprend en outre un guidage qui est disposé au moins le long d'une face de l'élément de filtre (18), dans lequel le guidage positionne l'élément souple (20) à peu près contre le pourtour de l'élément de filtre (18).

7. Récipient selon la revendication 1,
**caractérisé en ce**
**que** l'élément souple (20) est disposé axialement autour d'un pourtour extérieur de l'élément de filtre (18).

8. Récipient selon la revendication 7,
**caractérisé en ce**
**que** l'élément souple (20) définit une fente entre une surface intérieure de l'élément souple (20) et le pourtour extérieur de l'élément de filtre (18).

9. Récipient selon la revendication 7,
**caractérisé en ce**
**que** l'élément souple (20) entoure le pourtour extérieur de l'élément de filtre (18) en une spirale et une disposition verticale.
